(19) **Europäisches Patentamt / European Patent Office / Office européen des brevets**

(11) **EP 1 783 659 B1**

(12) **FASCICULE DE BREVET EUROPEEN**

(45) Date de publication et mention
de la délivrance du brevet:
**16.07.2008   Bulletin 2008/29**

(51) Int Cl.:
***G06K 7/00*** (2006.01)

(21) Numéro de dépôt: **06291733.1**

(22) Date de dépôt: **07.11.2006**

(54) **Identification d'etiquette radiofrequence**

Identifikation von Sicherungsetiketten

Radio frequency label identification

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.11.2005   FR 0511350**

(43) Date de publication de la demande:
**09.05.2007   Bulletin 2007/19**

(73) Titulaire: **SAGEM Sécurité**
**75015 Paris (FR)**

(72) Inventeurs:
• **Chabanne, Hervé,**
**c/o Sagem Défence Sécurité**
**75015 Paris (FR)**
• **Dottax, Emmanuelle,**
**c/o Sagem Défence Sécurité**
**75015 Paris (FR)**
• **Bringer, Julien,**
**c/o Sagem Défence Sécurité**
**75015 Paris (FR)**

(74) Mandataire: **Cabinet Plasseraud**
**52 rue de la Victoire**
**75440 Paris Cedex 09 (FR)**

(56) Documents cités:
• **WEISS A: "Security Parallels between People and Pervasive Devices" PERVASIVE COMPUTING AND COMMUNICATIONS WORKSHOPS, 2005. PERCOM 2005 WORKSHOPS. THIRD IEEE INTERNATIONAL CONFERENCE ON KAUAI ISLAND, HI, USA 08-12 MARCH 2005, PISCATAWAY, NJ, USA, IEEE, 8 mars 2005 (2005-03-08), pages 105-109, XP010779709 ISBN: 0-7695-2300-5**
• **GILBERT H ET AL: "Active attack against HB<E6>+</E6>: a provably secure lightweight authentication protocol" ELECTRONICS LETTERS, IEE STEVENAGE, GB, vol. 41, no. 21, 13 octobre 2005 (2005-10-13), pages 1169-1170, XP006025388 ISSN: 0013-5194**

**Description**

La présente invention concerne des systèmes d'identification radio basés sur des étiquettes radiofréquence, ou puces RFID (pour 'Radio Frequency Identification'), et plus particulièrement la protection de données échangées dans de tels systèmes d'identification.

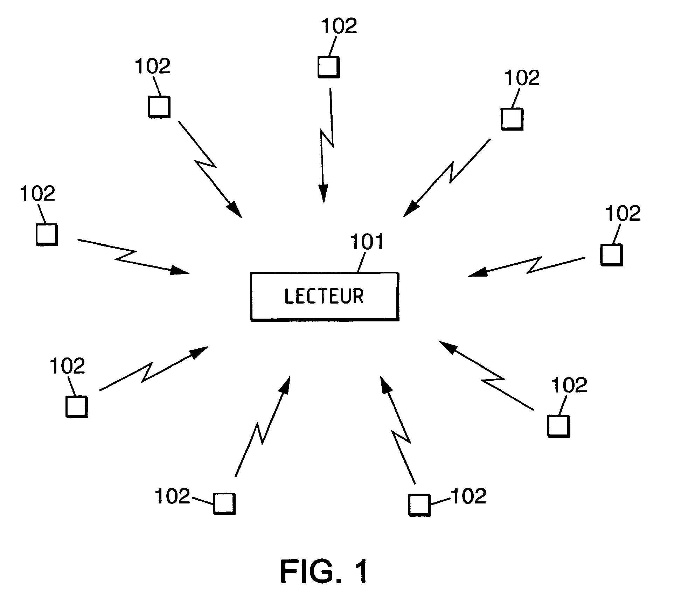

La figure 1 illustre un système d'identification radio comprenant un lecteur d'étiquettes radio 101 qui peut être en communication radio avec une pluralité d'étiquettes radiofréquence 102. Une étiquette radiofréquence est en général composée d'un support papier ou plastique, d'un circuit intégré, et d'une antenne. Une telle étiquette radiofréquence est activée sur réception d'un signal d'activation émis par le lecteur d'étiquettes radio. De tels systèmes d'identification radio peuvent fonctionner avec des signaux basse fréquence ou encore avec des signaux haute fréquence.

Dans un tel système d'identification radio, un identifiant unique dans le système est associé à chaque étiquette radiofréquence. Le lecteur est alors en mesure d'identifier une étiquette sur la base des informations envoyées depuis ladite étiquette et en fonction d'une liste des identifiants des étiquettes radio 102 du système.

Pour qu'un tel système d'identification radio soit fiable, il convient de conserver secret, entre le lecteur et les étiquettes radio respectives, chacun des identifiants 102 du système radio. Or, dans un tel système, l'identifiant d'une étiquette est échangé entre l'étiquette et le lecteur. La fiabilité d'un tel système d'identification repose alors notamment sur les moyens de protection des identifiants respectifs des étiquettes radiofréquence au cours de certains de ces échanges entre le lecteur d'étiquettes et les étiquettes radio.

Ainsi, pour éviter qu'une autre entité puisse usurper l'identifiant associé à une étiquette du système et puisse alors frauder un tel système d'identification radio, ces échanges de données peuvent être cryptés.

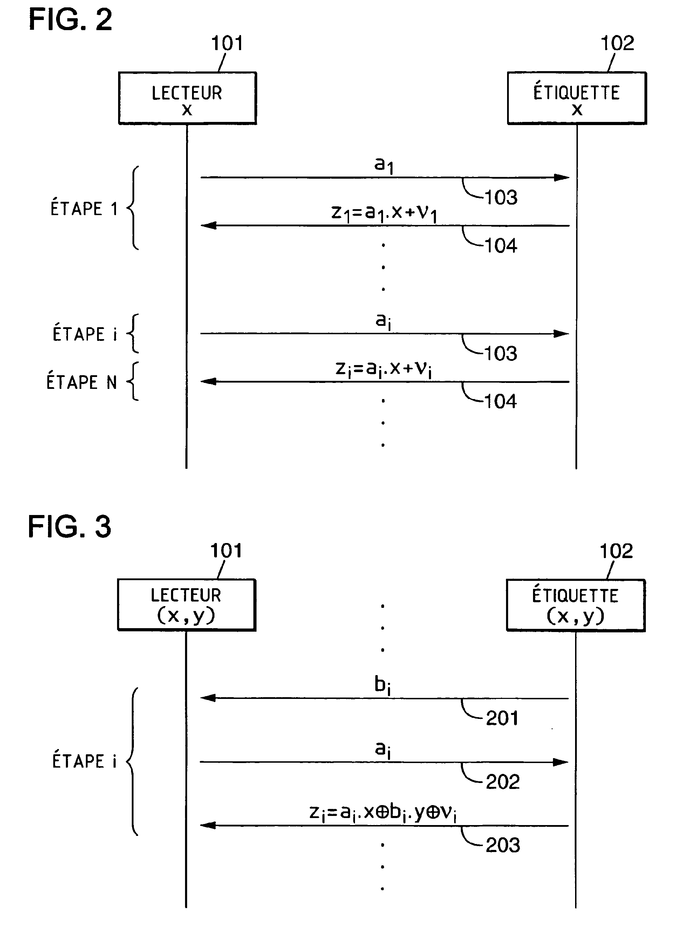

Après avoir été activée par un signal radio d'activation, une étiquette radio peut communiquer avec le lecteur d'étiquettes radio selon différents protocoles de communications qui sont à la disponibilité de l'homme du métier. Par exemple, un protocole HB (pour 'Hopper, Blum') permet une telle communication entre un lecteur et une étiquette radiofréquence. Selon ce protocole, un identifiant secret x est connu uniquement par le lecteur et par l'étiquette radiofréquence. La figure 2 illustre une communication entre le lecteur et l'étiquette radio selon le protocole HB.

On note que dans les exemples décrits ci-dessous, les nombres $a_i$ et x utilisés sont des nombres binaires de k bits, k étant un entier.

Selon le protocole HB, l'identification d'une étiquette par le lecteur est réalisée en répétant N fois une étape de cryptage de l'identifiant de l'étiquette considérée. Au cours d'une telle étape de cryptage, étape i, pour i entier compris entre 1 et N, le lecteur transmet un message 103, à destination de l'étiquette radio, indiquant un nombre aléatoire $a_i$, compris dans l'ensemble, noté $\{0, 1\}^k$, des nombres binaires de k bits. Puis, l'étiquette radio crypte son identifiant secret en utilisant le nombre $a_i$ aléatoire envoyé par le lecteur.

Pour réaliser un tel cryptage, l'étiquette génère un nombre aléatoire $v_i$ et obtient une valeur de l'identifiant crypté selon l'équation suivante :

$$z_i = a_i . x \oplus v_i \qquad\qquad (1)$$

où $v_i$ est généré de sorte à appartenir à l'ensemble $\{0, 1\}$, avec une probabilité déterminée $\eta$ pour que $v_i$ soit égal à 1.

On note que le signe '$\oplus$' indique une opération 'OU Exclusif' et le signe '.' indique une opération 'OU Exclusif des différents résultats des opérations 'ET' effectuées bit à bit sur les deux nombres $a_i$ et x.

Cette étape est donc répétée N fois. Par conséquent, le lecteur d'étiquettes radio reçoit N valeurs $z_i$, pour chacune desquelles les valeurs du nombre aléatoire $a_i$ et du nombre aléatoire $v_i$ varient.

Le lecteur d'étiquettes radio connaît la valeur de la probabilité déterminée $\eta$ caractérisant la génération du nombre aléatoire $v_i$. Par conséquent, à partir des N valeurs $z_i$, de l'identifiant crypté, reçues dans les messages 104 et sur la base de la liste des identifiants secrets respectivement associés aux étiquettes radio du système et des N premier et second nombres aléatoires, le lecteur d'étiquettes radio est en mesure de déterminer l'identifiant secret x de l'étiquette considérée, en vérifiant que l'égalité (1) est fausse au plus un nombre de fois correspondant à $\eta.N$.

Toutefois, une attaque active d'un tel protocole HB permet de déterminer l'identifiant secret x associé à l'étiquette considérée. En effet, si on s'interpose entre le lecteur d'étiquettes et l'étiquette radio, de sorte à fournir à l'étiquette radiofréquence un même nombre à la place des nombres aléatoires $a_i$ fournis par le lecteur, on est en mesure de déterminer de l'information sur x.

Un protocole de communication pour un système d'identification par radio, noté HB+, propose une protection contre une telle attaque active en introduisant une valeur aléatoire supplémentaire, lors du cryptage de l'identifiant secret de l'étiquette radio. Un tel protocole et de possibles attaques sont décrits dans le document "Active attack against HB+: a probably secure lightweight authentication protocol "Electronics Letters, IEE Sterenage, vol 41, no 21, 13 octobre 2005. La figure 3 illustre un tel protocole HB+, basé sur une répétition d'une étape de cryptage, seule une étape i étant représentée.

Selon ce protocole HB+, un identifiant secret de l'étiquette considérée, connu du lecteur et de ladite étiquette, est noté (x, y) où x et y sont des nombres binaires de k bits. A chacune des étapes i précédemment décrites, l'étiquette envoie au lecteur d'étiquettes radio un message 201 comprenant un premier nombre aléatoire $b_i$. Sur réception de ce premier nombre aléatoire $b_i$, le lecteur d'étiquettes radio envoie à l'étiquette un message 202 comprenant un second nombre aléatoire $a_i$. Puis, sur la base des premier et second nombres aléatoires, l'étiquette radiofréquence envoie au lecteur d'étiquettes un message 203 qui indique une valeur de son identifiant secret crypté qui vérifie l'équation suivante :

$$z_i = a_i.x \oplus b_i.y \oplus v_i \qquad (2)$$

où $v_i$ est compris dans l'ensemble {0,1}, avec une probabilité déterminée $\eta$ pour que $v_i$ soit égal à 1, ladite probabilité $\eta$ étant connue du lecteur et de l'étiquette radio.

Au cours des N répétitions de cette étape de cryptage, l'étiquette fournit au lecteur d'étiquettes, N valeurs $z_i$ de l'identifiant secret crypté.

Certes, une communication selon un tel protocole HB+ s'avère être mieux protégée qu'une communication selon le protocole HB contre certaines attaques. Toutefois, une attaque active consistant à s'interposer entre le lecteur et l'étiquette radio et à envoyer, au cours des émissions du message 201, un message 202 modifié de sorte à remplacer le second nombre aléatoire $a_i$, généré par le lecteur, par un nombre $a_i'$ vérifiant l'équation suivante :

$$a_i' = a_i \oplus \delta \qquad (3)$$

où $\delta$ est un nombre sur k bits, qui a une valeur constante tout au long des N répétitions de l'étape de cryptage, étape i.

Dans ce cas, le message 203 transmet un nombre $z_i$ vérifiant l'équation suivante :

$$z_i = a_i'.x \oplus b_i.y \oplus v_i = (a_i \oplus \delta).x \oplus b_i.y \oplus v_i \qquad (4)$$

Dans un tel contexte, si le lecteur est en mesure d'identifier l'étiquette, on en déduit, avec une grande probabilité, que $\delta.x$ est égal à 0. Dans le cas contraire, on en déduit que $\delta.x$ est égal à 1. Ainsi, en fonction de l'impossibilité ou de la possibilité d'identifier l'étiquette radiofréquence par le lecteur, on peut en déduire de l'information sur l'identifiant secret x. Puis, une telle méthode de déduction peut être transposée sur les nombres $b_i$ et y.

Il existe donc une attaque active permettant de découvrir l'identifiant secret (x,y) de l'étiquette radiofréquence dans une communication entre le lecteur et l'étiquette réalisée selon le protocole HB+. Une telle attaque est décrite dans le document 'An active attack against HB+' de Henri Gilbert, Matthew Robshaw et Hervé Sibert.

La présente invention vise à améliorer la protection d'une communication dans un système d'identification radio contre des attaques visant à découvrir les identifiants secrets des étiquettes radio.

Un premier aspect de la présente invention propose un procédé d'identification d'une étiquette radiofréquence dans un système d'identification d'étiquettes radiofréquence comprenant un lecteur d'étiquettes radiofréquence et une pluralité d'étiquettes radiofréquence, un identifiant unique et secret (x,y,x',y') étant associé à chacune desdites étiquettes radiofréquence.

Le procédé peut comprendre les étapes suivantes :

/a/ envoyer un premier nombre aléatoire depuis une étiquette radiofréquence à destination du lecteur d'étiquettes radiofréquence ;

/b/ envoyer un second nombre aléatoire depuis le lecteur d'étiquettes radiofréquence à destination de l'étiquette radiofréquence;

/c/ au niveau de ladite étiquette radiofréquence, crypter l'identifiant de l'étiquette en réalisant les étapes suivantes consistant à :

- générer un troisième et un quatrième nombres aléatoires selon une règle probabiliste ;
- transformer lesdits premier et second nombres aléatoires selon une fonction déterminée et obtenir respectivement des premier et second nombres transformés ;
- obtenir une valeur de l'identifiant crypté en combinant l'identifiant de l'étiquette avec les premier et second nombres aléatoires, avec les premier et second nombres transformés et avec les troisième et quatrième nombres aléatoires ;

/d/ émettre depuis l'étiquette radiofréquence à destination du lecteur d'étiquettes radiofréquence, la valeur de l'identifiant crypté résultant de l'étape /c/ ;

/e/ répéter N fois les étapes /a/ à /d/, N étant un nombre entier ;

/f/ identifier parmi une liste d'identifiants d'étiquette, au niveau du lecteur d'étiquettes, l'étiquette radiofréquence en déterminant l'identifiant associé en fonction des N valeurs de l'identifiant crypté reçues, de la fonction déterminée, des N premiers et seconds nombres aléatoires et de la règle probabiliste.

Lorsque les premier et second nombres aléatoires sont des nombres binaires de k bits, k étant un entier, la fonction déterminée f est une permutation de l'ensemble des nombres binaires de k bits, qui vérifie, pour un couple quelconque de nombres binaires de k bits $\delta, \lambda$, où $\delta$ est non nul, l'équation suivante uniquement pour un nombre de valeurs d qui est inférieur à une valeur seuil :

$$f(d \oplus \delta) = f(d) \oplus \lambda$$

La fonction déterminée f présente de préférence un niveau de complexité inférieur à une valeur seuil de niveau de complexité.

Lorsque l'identifiant de l'étiquette comprend un premier, un second, un troisième et un quatrième nombres binaires de k bits, alors, à l'étape /c/, on peut obtenir une première partie z de la valeur de l'identifiant crypté selon l'équation suivante :

$$z = a.x \oplus b.y \oplus v$$

où b et a sont respectivement le premier et le second nombres aléatoires sous une forme binaire de k bits ;

où x et y sont respectivement les premier et second nombres binaires de l'identifiant ; et

où $v$ est le troisième nombre aléatoire ;

et on peut obtenir une seconde partie z' de la valeur de l'identifiant crypté selon l'équation suivante :

$$z' = f(a).x' \oplus f(b).y' \oplus v'$$

où x' et y' sont respectivement les troisième et quatrième nombres binaires de l'identifiant ;

où f est la fonction déterminée et où f(b) et f(a) sont respectivement le premier et le second nombres transformés ; et

où $v'$ est le quatrième nombre aléatoire.

On peut prévoir, à l'étape /c/, d'envoyer la première partie z de la valeur de l'identifiant crypté dans un premier message (403) et la seconde partie z' de la valeur de l'identifiant crypté dans un second message (404).

La règle probabiliste de génération de nombres aléatoires peut être définie de sorte à générer un nombre déterminé avec une probabilité ayant une valeur déterminée.

Un deuxième aspect de la présente invention propose une étiquette radiofréquence dans un système d'identification d'étiquettes radiofréquence comprenant un lecteur d'étiquettes radiofréquence, un identifiant unique et secret étant associé à ladite étiquette radiofréquence. L'étiquette peut comprendre :

- une entité de stockage adaptée pour stocker l'identifiant de ladite étiquette ;
- une entité de génération aléatoire adaptée d'une part pour générer un premier nombre aléatoire et d'autre part pour générer selon une règle probabiliste des nombres aléatoires ;
- une entité de transformation adaptée pour transformer un nombre selon une fonction déterminée et fournir un nombre transformé ;
- une entité de cryptage adaptée pour crypter l'identifiant de l'étiquette radiofréquence en combinant l'identifiant avec le premier nombre aléatoire et un second nombre aléatoire reçu depuis le lecteur d'étiquettes, avec des troisième et quatrième nombres aléatoires fournis par l'entité de génération selon la règle probabiliste, et avec des premier et second nombres transformés fournis par l'entité de transformation à partir des premier et second nombres aléatoires ;
- une entité de gestion d'interface avec le lecteur d'étiquettes radiofréquence adaptée pour envoyer le premier nombre aléatoire au lecteur d'étiquettes, pour recevoir le second nombre aléatoire depuis le lecteur d'étiquettes et pour envoyer la valeur de l'identifiant crypté de l'étiquette fournie par l'entité de cryptage.

La fonction déterminée f, sur laquelle est basée l'entité de transformation (503), lorsque les premier et second nombres aléatoires sont des nombres binaires de k bits, k étant un entier, peut être une permutation de l'ensemble des nombres binaires de k bits, qui vérifie, pour un couple quelconque de nombres binaires de k bits $\delta,\lambda$, où $\delta$ est non nul, l'équation suivante uniquement pour un nombre de valeurs d qui est inférieur à une valeur seuil :

$$f(d \oplus \delta) = f(d) \oplus \lambda$$

Lorsque l'identifiant de l'étiquette comprend un premier, un second, un troisième et un quatrième nombres binaires de k bits, l'entité de cryptage peut fournir d'une part une première partie z de la valeur de l'identifiant crypté selon l'équation suivante :

$$z = a.x \oplus b.y \oplus v$$

où b et a sont respectivement le premier et le second nombres aléatoires sous une forme binaire de k bits ;
où x et y sont respectivement les premier et second nombres binaires de l'identifiant; et
où $v$ est le troisième nombre aléatoire ;
et peut fournir d'autre part une seconde partie z' de la valeur de l'identifiant crypté selon l'équation suivante :

$$z' = f(a).x' \oplus f(b).y' \oplus v'$$

où x' et y' sont respectivement les troisième et quatrième nombres binaires de l'identifiant ;
où f est la fonction déterminée et où f(b) et f(a) sont respectivement le premier et le second nombres transformés ; et
où $v'$ est le quatrième nombre aléatoire.
L'entité de gestion d'interface peut envoyer au lecteur d'étiquettes la première partie de la valeur de l'identifiant crypté dans un premier message et la seconde partie de la valeur de l'identifiant crypté dans un second message.
Un troisième aspect de la présente invention propose un dispositif d'identification d'étiquettes radiofréquence dans un système d'identification d'étiquettes radiofréquence comprenant une pluralité d'étiquettes radiofréquence, un identifiant unique et secret étant associé à chacune desdites étiquettes radiofréquence. Le dispositif peut comprendre :

- une entité de génération aléatoire adaptée pour générer un nombre aléatoire ;
- une entité de gestion d'interface avec lesdites étiquettes radiofréquence adaptée pour recevoir un premier nombre aléatoire depuis une étiquette radiofréquence, pour envoyer un second nombre aléatoire, généré par ladite entité de génération aléatoire, à ladite étiquette radiofréquence et pour recevoir une valeur de l'identifiant crypté, résultant d'une combinaison de l'identifiant de ladite étiquette avec les premier et second nombres aléatoires, avec des premier et second nombres transformés issus d'une transformation desdits premier et second nombres aléatoires selon une fonction déterminée, et avec des troisième et quatrième nombres aléatoires générés selon une règle probabiliste par ladite étiquette ;
- une entité de stockage adaptée pour stocker la fonction déterminée, la règle probabiliste, et une liste d'identifiants associés à des étiquettes du système ;
- une entité d'identification adaptée pour identifier ladite étiquette radiofréquence en déterminant l'identifiant associé en fonction de N valeurs de l'identifiant crypté reçues depuis l'étiquette par l'entité de gestion d'interface, de la fonction déterminée, de la règle probabiliste, des N premiers et seconds nombres aléatoires utilisés pour fournir lesdites N valeurs de l'identifiant crypté et de la liste des identifiants stockés dans l'entité de stockage.

La fonction déterminée f, lorsque les premier et second nombres aléatoires sont des nombres binaires de k bits, k étant un entier, peut être une permutation de l'ensemble des nombres binaires de k bits, qui vérifie, pour un couple quelconque de nombres binaires de k bits $\delta,\lambda$, où $\delta$ est non nul, l'équation suivante uniquement pour un nombre de valeurs d qui est inférieur à une valeur seuil :

$$f(d \oplus \delta) = f(d) \oplus \lambda$$

La fonction déterminée f présente un niveau de complexité inférieur à une valeur seuil de niveau de complexité.

Lorsque l'identifiant de l'étiquette comprend un premier, un second, un troisième et un quatrième nombres binaires de k bits, la valeur de l'identifiant crypté peut comprendre une première partie z vérifiant l'équation suivante :

$$z = a.x \oplus b.y \oplus v$$

où b et a sont respectivement le premier et le second nombres aléatoires sous une forme binaire de k bits ;
où x et y sont respectivement les premier et second nombres binaires de l'identifiant; et
où $v$ est le troisième nombre aléatoire ;
et peut comprendre une seconde partie z' vérifiant l'équation suivante :

$$z' = f(a).x' \oplus f(b).y' \oplus v'$$

où x' et y' sont respectivement les troisième et quatrième nombres binaires de l'identifiant de l'étiquette radiofréquence ;
où f est la fonction déterminée et où f(b) et f(a) sont respectivement le premier et le second nombres transformés ; et
où $v'$ est le quatrième nombre aléatoire.
L'entité de gestion d'interface peut recevoir la première partie z de la valeur de l'identifiant crypté dans un premier message et la seconde partie z' de la valeur de l'identifiant crypté dans un second message.
Un quatrième aspect de la présente invention propose un système d'identification d'étiquettes radiofréquence comprenant un dispositif d'identification d'étiquettes selon le troisième aspect de la présente invention et une pluralité d'étiquettes radiofréquence selon le deuxième aspect de la présente invention.
D'autres aspects, buts et avantages de l'invention apparaîtront à la lecture de la description d'un de ses modes de réalisation.
L'invention sera également mieux comprise à l'aide des dessins, sur lesquels :

- la figure 1 illustre une architecture d'un système d'identification d'étiquettes radiofréquence selon l'art antérieur ;
- la figure 2 illustre un échange de messages dans un système d'identification radiofréquence selon l'art antérieur ;
- la figure 3 illustre un autre échange de messages dans un système d'identification radiofréquence selon l'art antérieur ;
- la figure 4 illustre un échange de messages dans un système d'identification radiofréquence selon un mode de réalisation de la présente invention ;
- la figure 5 illustre une architecture d'étiquette radiofréquence selon un mode de réalisation de la présente invention ; et
- la figure 6 illustre une architecture d'un lecteur d'étiquettes radiofréquence selon un mode de réalisation de la présente invention.

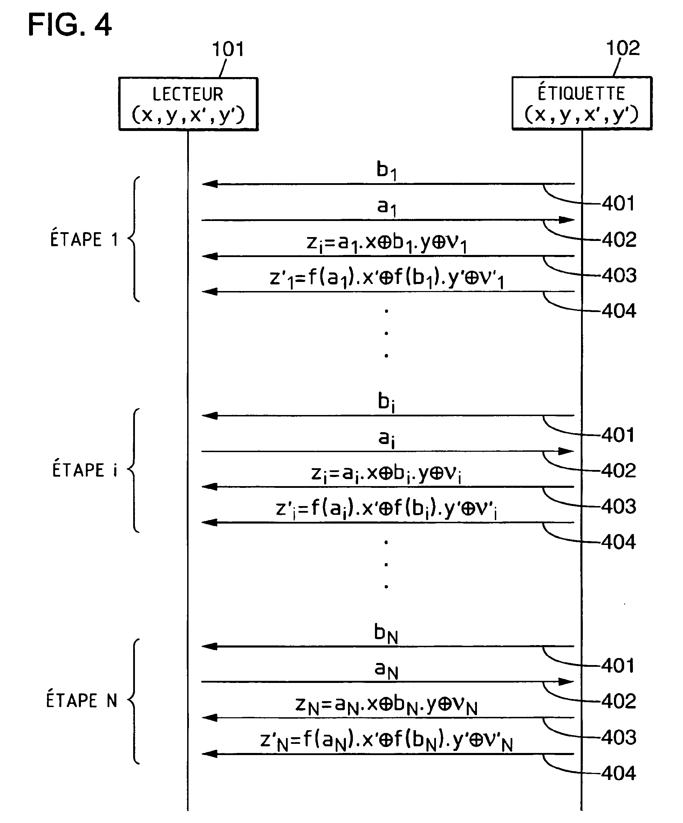

Dans un mode de réalisation de la présente invention, à chaque étiquette 102 du système d'identification radio d'étiquettes illustré en figure 1 est associé un identifiant secret comprenant quatre nombres binaires, x, y, x' et y', chacun étant composé de k bits, k étant un nombre entier. La figure 4 illustre un tel mode de réalisation. L'étiquette 102 est initialement activée par un signal d'activation, soit haute fréquence, soit basse fréquence, qui peut être émis par le lecteur d'étiquettes radio 101.
Selon un tel mode de réalisation, l'identification d'une étiquette est réalisée en répétant N fois une étape de cryptage telle que décrite dans les section suivantes.
Ainsi, au cours d'une étape de cryptage, étape i, l'étiquette envoie tout d'abord un message 401 au lecteur pour lui transmettre un premier nombre aléatoire $b_i$ généré de préférence par ladite étiquette. En réponse à ce message 401, le lecteur émet à destination de l'étiquette un message 402 indiquant un second nombre aléatoire $a_i$ généré de préférence par ledit lecteur 101. Puis, l'étiquette cherche à crypter son identifiant de sorte à protéger sa transmission jusqu'au lecteur 101.
De préférence, l'étiquette combine une première partie, x et y, de son identifiant avec les premier et second nombres aléatoires, $a_i$ et $b_i$, ainsi qu'avec un troisième nombre aléatoire $v_i$ généré par l'étiquette selon une règle probabiliste. Une telle combinaison fournit une première partie de la valeur de l'identifiant crypté qui peut par exemple vérifier l'équation suivante :

$$z_i = a_i.x \oplus b_i.y \oplus v_i \qquad\qquad (5)$$

Par ailleurs, on combine une seconde partie, x' et y', de l'identifiant de l'étiquette d'une part avec un premier et un second nombres transformés issus d'une transformation des premier et second nombres aléatoires selon une fonction f connue du lecteur d'étiquettes radio 101 et de l'étiquette radiofréquence 102, et d'autre part avec un quatrième nombre aléatoire v'$_i$ généré par l'étiquette selon une règle probabiliste.

De préférence, la seconde partie de la valeur de l'identifiant crypté résultant de cette combinaison vérifie l'équation suivante :

$$z_i' = f(a_i).x' \oplus f(b_i).y' \oplus v_i' \qquad (5')$$

Ainsi, dans un message 403, l'étiquette radiofréquence envoie le résultat de la combinaison de la première partie de la valeur de l'identifiant crypté, et dans un message 404, l'étiquette radiofréquence envoie le résultat de la combinaison de la seconde partie de la valeur de l'identifiant crypté de l'étiquette radiofréquence.

De ce qui précède, on déduit aisément d'autres modes de réalisation de la présente invention. Ainsi, par exemple, les résultats de la combinaison de la première et de la seconde parties de l'identifiant de l'étiquette peuvent être envoyés dans un seul et même message. La présente invention couvre toutes les façons de transmettre ces différentes valeurs de l'identifiant crypté au lecteur d'étiquettes.

L'étape telle que décrite précédemment fournit donc une valeur de l'identifiant crypté de l'étiquette. Cette étape est répétée N fois. Par conséquent, le lecteur d'étiquettes radiofréquence reçoit N valeurs de l'identifiant crypté, chacun étant issu d'une part d'une première combinaison de l'identifiant avec le premier et le second nombres aléatoires et le troisième nombre aléatoire, et d'autre part, d'une seconde combinaison de l'identifiant avec des premier et second nombres transformés obtenus par application de la fonction f aux premier et second nombres aléatoires, et avec le quatrième nombre aléatoire.

On note que les troisième et quatrième nombres aléatoires sont de préférence générés selon une règle de génération qui applique une règle probabiliste déterminée et connue à la fois par l'étiquette et par le lecteur. Ainsi, par exemple, cette règle probabiliste peut permettre de générer un nombre binaire déterminé, avec une probabilité déterminée de valeur η. Cette valeur de probabilité η est connue du lecteur et de l'étiquette.

Par la suite, la règle probabiliste utilisée est définie par le fait que les troisième et quatrième nombres aléatoires générés correspondent au nombre binaire 1 avec une probabilité déterminée η. Toutefois, l'invention n'est pas limitée à une telle règle probabiliste.

Le lecteur d'étiquettes radio reçoit donc N valeurs de l'identifiant crypté de l'étiquette radiofréquence 102. Dans un mode de réalisation de la présente invention, une valeur de l'identifiant crypté présente deux parties qui peuvent être traitées par le lecteur de manière distincte. La première partie $z_i$, respectivement la seconde partie $z_i'$, de la valeur de l'identifiant crypté reçue par le lecteur résulte de la première combinaison, respectivement de la seconde combinaison précédemment décrite.

Quelle que soit la méthode utilisée pour transmettre les deux parties des N valeurs de l'identifiant crypté, depuis l'étiquette au lecteur d'étiquettes, le lecteur est en mesure de déterminer la première z et la seconde z' parties d'une même valeur de l'identifiant crypté et de reconstituer la valeur de l'identifiant crypté (z, z').

Dans un mode de réalisation de la présente invention, pour identifier la première partie de l'identifiant de l'étiquette, le lecteur cherche à déterminer, pour les N valeurs de l'identifiant crypté reçues, si l'équation suivante est vérifiée, compte tenu de la règle probabiliste :

$$z_i = a_i.x \oplus b_i.y \qquad (6)$$

Le lecteur détermine une partie de l'identifiant de l'étiquette (x,y), si l'équation (6) est vérifiée avec une probabilité sensiblement égale à 1-η.

Puis, le lecteur cherche à déterminer la seconde partie de l'identifiant de l'étiquette. Il considère alors les valeurs de l'identifiant crypté, et détermine si l'équation suivante, relative à la seconde partie des valeurs $z_i'$ de l'identifiant crypté, est vérifiée avec une probabilité sensiblement égale à 1-η :

$$z_i' = f(a_i).x' \oplus f(b_i).y' \qquad (7)$$

Si tel est le cas, la seconde partie de l'étiquette est également déterminée et le lecteur a donc identifié l'étiquette de radiofréquence.

Une telle méthode de cryptage de l'identifiant de l'étiquette (x,y,x',y') permet avantageusement une protection contre les attaques actives, lorsque la fonction de transformation, utilisée pour transformer les premier et second nombres aléatoires, vérifie certaines caractéristiques spécifiques.

A cet effet, on peut définir une telle fonction f de transformation en spécifiant que f est une permutation de l'ensemble {0,1 }$^k$ et que, pour un couple quelconque de nombres binaires de k bits ($\delta$, $\lambda$) avec $\delta$ non nul, le nombre maximum M de valeurs d de l'ensemble {0,1}$^k$ pour lesquelles la fonction f vérifie l'équation suivante est relativement faible :

$$f(d \oplus \delta) = f(d) \oplus \lambda \qquad (8)$$

On peut ainsi définir que le nombre maximal M est inférieur à une valeur seuil qui permet de considérer que l'équation (8) est rarement vérifiée dans l'ensemble {0 ,1}$^k$, pour un couple constant de valeurs ($\delta$, $\lambda$).

Ainsi, lorsque la fonction f vérifie une telle caractéristique de probabilité, une attaque active telle que celle, par exemple, décrite dans le document 'An active attack against HB+' précédemment cité, se révèle être vaine.

Dans de telles conditions, lorsqu'une attaque active consiste à remplacer le second nombre aléatoire $a_i$, par un nombre $a_i'$ vérifiant l'équation (3) dans laquelle $\delta$ est un nombre de valeur constante au cours des répétitions de l'étape de cryptage, le lecteur reçoit des valeurs de l'identifiant crypté ayant une seconde partie qui vérifie l'équation suivante :

$$z_i' = f(a_i \oplus \delta).x' \oplus f(b_i).y' \oplus v_i' \qquad (9)$$

Dans de telles conditions, que le lecteur identifie ou non l'étiquette, l'attaque ne permet pas de remonter jusqu'à la valeur de l'identifiant.

En effet, puisque la fonction f présente la caractéristique précédemment énoncée, c'est-à-dire qu'il y a relativement peu de valeurs $a_i$ qui, pour un couple ($\delta$, $\lambda$) quelconque, vérifient l'équation (8), une telle attaque ne permet pas de déduire une valeur de l'identifiant de l'étiquette en fonction de l'identification ou de la non identification de l'étiquette par le lecteur.

Il résulte que, dans un mode de réalisation de la présente invention, les échanges de messages entre le lecteur et une étiquette radiofréquence destinés à l'identification de l'étiquette sont résistants face aux attaques actives à l'encontre du secret de l'identifiant de l'étiquette radio.

Une telle fonction de transformation présente en outre de préférence un niveau de complexité relativement faible. En effet, les étiquettes radio n'ayant généralement pas des capacités de calculs très importantes, il convient de veiller à limiter la puissance calculatoire requise par le cryptage des identifiants des étiquettes radio.

De nombreuses fonctions de transformations, vérifiant la caractéristique énoncée en référence à l'équation (8) et présentant un niveau de complexité relativement faible, peuvent être construites et utilisées dans un système d'identification radiofréquence selon un mode de réalisation de la présente invention.

De telles fonctions peuvent aisément être construites à partir de différentes méthodes. Les sections suivantes décrivent un exemple de construction d'une telle fonction f de transformation.

Pour un nombre k donné, la fonction f est une permutation de l'ensemble {0,1}$^k$. On détermine deux nombres m et n de sorte que l'équation suivante soit vérifiée :

$$k = m.n \qquad (11)$$

Puis, on peut alors construire la fonction déterminée f à partir d'un nombre entier n de fonctions $g_1$ à $g_n$ qui sont chacune définies dans l'ensemble de nombres binaires {0,1}$^m$. Ces n fonctions $g_1$ à $g_n$ sont des permutations de faible complexité. De plus, ces fonctions présentent chacune un nombre maximum G limité et faible de valeurs de p, pour p élément de l'ensemble {0,1}$^m$, pour lesquelles l'équation suivante est vérifiée, pour i compris entre 1 et n :

$$g_i(p \oplus \delta) = g_i(p) \oplus \lambda \qquad (12)$$

où $\delta$ est non nul et $\delta$, $\lambda$ sont des éléments de l'ensemble {0,1}$^m$.

Afin de faire bénéficier à la fonction déterminée f des caractéristiques des fonctions $g_1$ à $g_n$, énoncées relati-

vement à l'équation (12) et relativement au niveau de complexité, on peut avantageusement construire f selon l'équation suivante :

$$f(q) = (g_1(q_0,...,q_{m-1}), g_2(q_m,...,q_{2m-1}),...,g_n(q_{k-m},...,q_{k-1})) \quad (13)$$

où $q=(q_0,...,q_{k-1})$ dans l'ensemble $\{0,1\}^k$.

Dans un tel contexte, on détermine les valeurs des nombres m et n et on détermine les fonctions $g_1$ à $g_n$, en fonction du nombre maximum M et de la valeur seuil de niveau de complexité à respecter pour la fonction déterminée f.

Par exemple, pour un nombre m impair, il est possible de choisir des fonctions $g_i$, pour i compris entre 1 et n, de sorte qu'elles transforment un élément p en un élément $p^3$ dans le corps fini L à $2^m$ éléments, où L est mis en bijection avec l'ensemble $\{0,1\}^m$. Dans un tel cas, on obtient pour chacune des fonctions $g_i$, un nombre maximal G de valeurs p vérifiant l'équation (12) qui est égal à 2.

Par conséquent, on obtient un nombre maximal M égal à $2^{k-m+1}$ de valeurs $a_i$ de l'ensemble $\{0,1\}^k$ vérifiant l'équation (8).

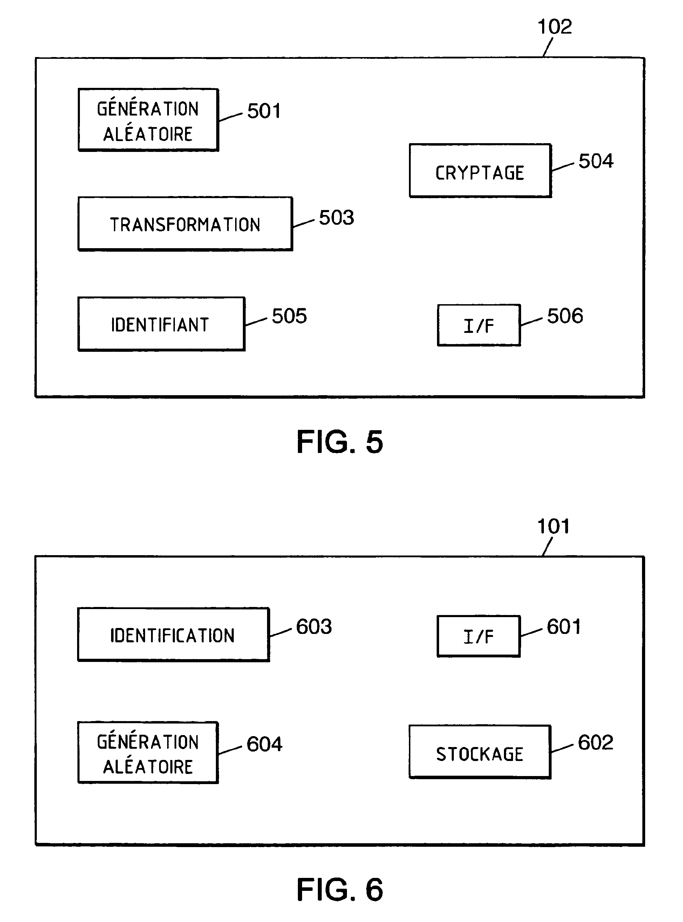

La figure 5 illustre une étiquette radiofréquence selon un mode de réalisation de la présente invention. Elle comprend une entité de stockage 505 adaptée pour stocker l'identifiant de l'étiquette. Elle comprend en outre une entité de génération aléatoire 501 adaptée pour générer le premier nombre aléatoire $b_i$ transmis au lecteur dans un message 401, cette génération étant réalisée selon une règle uniforme. Une telle entité est également adaptée pour générer des troisième et quatrième nombres aléatoires selon une règle probabiliste déterminée. Elle possède en outre une entité de transformation 503 adaptée pour transformer un nombre selon la fonction déterminée f et pour fournir un nombre transformé. Cette entité de transformation fournit donc les premier et second nombres transformés qui sont combinés ensuite avec l'identifiant de l'étiquette pour obtenir la seconde partie de la valeur de l'identifiant crypté.

Une étiquette selon un mode de réalisation de la présente invention comprend en outre une entité de cryptage 504 adaptée pour crypter l'identifiant de l'étiquette radiofréquence en combinant cet identifiant, avec le premier nombre aléatoire fourni par l'entité de génération aléatoire 501 et le second nombre aléatoire reçu depuis le lecteur d'étiquettes, avec les troisième et quatrième nombres aléatoires, et avec les premier et second nombres aléatoires transformés par l'entité de transformation 503.

Puis, cette étiquette 102 comprend une entité de gestion d'interface 506 avec le lecteur d'étiquettes radiofréquence adaptée pour envoyer le premier nombre aléatoire $b_i$ au lecteur d'étiquettes, pour recevoir le second nombre aléatoire $a_i$ depuis le lecteur d'étiquettes et pour envoyer une valeur $z_i$, $z_i'$ de l'identifiant de l'étiquette crypté.

La figure 6 illustre un lecteur d'étiquettes radiofréquence selon un mode de réalisation de la présente invention. Un tel lecteur 101 comprend une entité de gestion d'interface 601 pour communiquer avec les étiquettes radiofréquence du système d'identification radio. Une telle entité est adaptée pour recevoir le premier nombre aléatoire $b_i$ depuis une étiquette radiofréquence 102, pour envoyer le second nombre aléatoire $a_i$ à l'étiquette radiofréquence et pour recevoir une valeur de l'identifiant crypté résultant d'une combinaison de l'identifiant de l'étiquette avec les premier et second nombres aléatoires et les premier et second nombres aléatoires transformés par la fonction déterminée, et avec les troisième et quatrième nombres aléatoires générés selon la règle probabiliste.

Un tel lecteur comprend en outre une entité de stockage 602 adaptée pour stocker la fonction déterminée f, la règle probabiliste de génération, et une liste d'identifiants associés à des étiquettes du système. Il a aussi une entité d'identification 603 adaptée pour identifier l'étiquette radiofréquence en déterminant l'identifiant associé, en fonction des N valeurs de l'identifiant crypté reçues depuis l'étiquette à identifier, de la fonction déterminée f, de la règle probabiliste de génération, des N premier et second nombres aléatoires et de la liste des identifiants stockés dans l'entité de stockage 602. Il comprend également une entité de génération de nombres aléatoires.

**Revendications**

1.  Procédé d'identification d'une étiquette radiofréquence (102) dans un système d'identification d'étiquettes radiofréquence comprenant un lecteur (101) d'étiquettes radiofréquence et une pluralité d'étiquettes radiofréquence, un identifiant unique et secret (x,y,x',y') étant associé à chacune desdites étiquettes radiofréquence ; ledit procédé comprenant les étapes suivantes :

/a/ envoyer (401) un premier nombre aléatoire ($b_i$) depuis une étiquette radiofréquence à destination du lecteur d'étiquettes radiofréquence ;
/b/ envoyer (402) un second nombre aléatoire ($a_i$) depuis le lecteur d'étiquettes radiofréquence à destination de l'étiquette radiofréquence;

/c/ au niveau de ladite étiquette radiofréquence, crypter l'identifiant de l'étiquette en réalisant les étapes suivantes consistant à :

- générer un troisième et un quatrième nombres aléatoires ($v_i, v_i'$) selon une règle probabiliste ;
- transformer lesdits premier et second nombres aléatoires selon une fonction déterminée et obtenir respectivement des premier et second nombres transformés (f($b_i$), f($a_i$)) ;
- obtenir une valeur de l'identifiant crypté en combinant l'identifiant de l'étiquette avec les premier et second nombres aléatoires, avec les premier et second nombres transformés et avec les troisième et quatrième nombres aléatoires ;

/d/ émettre (403,404), depuis l'étiquette radiofréquence à destination du lecteur d'étiquettes radiofréquence, la valeur de l'identifiant crypté résultant de l'étape /c/ ;

/e/ répéter N fois les étapes /a/ à /d/, N étant un nombre entier ;

/f/ identifier parmi une liste d'identifiants d'étiquette, au niveau du lecteur d'étiquettes, ladite étiquette radiofréquence en déterminant l'identifiant associé en fonction des N valeurs de l'identifiant crypté reçues, de la fonction déterminée, des N premiers et seconds nombres aléatoires et de la règle probabiliste.

2. Procédé d'identification selon la revendication 1, dans lequel, les premier et second nombres aléatoires étant des nombres binaires de k bits, k étant un entier, la fonction déterminée f est une permutation de l'ensemble des nombres binaires de k bits, qui vérifie, pour un couple quelconque de nombres binaires de k bits $\delta$, $\lambda$, où $\delta$ est non nul, l'équation suivante uniquement pour un nombre de valeurs d qui est inférieur à une valeur seuil :

$$f(d \oplus \delta) = f(d) \oplus \lambda$$

3. Procédé d'identification selon la revendication 1 ou 2, dans lequel la fonction déterminée f présente un niveau de complexité inférieur à une valeur seuil de niveau de complexité.

4. Procédé d'identification selon la revendication 2 ou 3, dans lequel, l'identifiant de l'étiquette comprenant un premier, un second, un troisième et un quatrième nombres binaires de k bits, à l'étape /c/, on obtient une première partie z de la valeur de l'identifiant crypté selon l'équation suivante :

$$z = a.x \oplus b.y \oplus v$$

où b et a sont respectivement le premier et le second nombres aléatoires sous une forme binaire de k bits ;
où x et y sont respectivement les premier et second nombres binaires de l'identifiant ; et
où $v$ est le troisième nombre aléatoire ;
et on obtient une seconde partie z' de la valeur de l'identifiant crypté selon l'équation suivante :

$$z' = f(a).x' \oplus f(b).y' \oplus v'$$

où x' et y' sont respectivement les troisième et quatrième nombres binaires de l'identifiant ;
où f est la fonction déterminée et où f(b) et f(a) sont respectivement le premier et le second nombres transformés ; et
où $v'$ est le quatrième nombre aléatoire.

5. Procédé d'identification selon la revendication 4, dans lequel, à l'étape /c/, la première partie z de la valeur de l'identifiant crypté est envoyée dans un premier message (403) et la seconde partie z' de la valeur de l'identifiant crypté est envoyée dans un second message (404).

6. Procédé d'identification selon l'une quelconque des revendications précédentes, dans lequel la règle probabiliste de génération de nombres aléatoires est définie de sorte à générer un nombre déterminé avec une probabilité ayant une valeur déterminée.

**7.** Etiquette radiofréquence (102) dans un système d'identification d'étiquettes radiofréquence comprenant un lecteur d'étiquettes radiofréquence (101), un identifiant unique et secret étant associé à ladite étiquette radiofréquence ; ladite étiquette comprenant :

- une entité de stockage (505) adaptée pour stocker l'identifiant (x,y,x',y') de ladite étiquette ;
- une entité de génération aléatoire (501) adaptée d'une part pour générer un premier nombre aléatoire ($b_i$) et d'autre part pour générer selon une règle probabiliste des nombres aléatoires ($v_i$, $v_i'$);
- une entité de transformation (503) adaptée pour transformer un nombre selon une fonction déterminée et fournir un nombre transformé ($f(a_i)$,$f(b_i)$)
- une entité de cryptage (504) adaptée pour crypter l'identifiant de l'étiquette radiofréquence en combinant l'identifiant avec le premier nombre aléatoire et un second nombre aléatoire ($a_i$) reçu depuis le lecteur d'étiquettes, avec des troisième et quatrième nombres aléatoires fournis par l'entité de génération selon la règle probabiliste, et avec des premier et second nombres transformés fournis par l'entité de transformation à partir des premier et second nombres aléatoires ;
- une entité de gestion d'interface (506) avec le lecteur d'étiquettes radiofréquence adaptée pour envoyer le premier nombre aléatoire au lecteur d'étiquettes, pour recevoir le second nombre aléatoire depuis le lecteur d'étiquettes et pour envoyer la valeur de l'identifiant crypté de l'étiquette fournie par l'entité de cryptage.

**8.** Etiquette radiofréquence selon la revendication 7, dans laquelle la fonction déterminée f, sur laquelle est basée l'entité de transformation (503), lorsque les premier et second nombres aléatoires sont des nombres binaires de k bits, k étant un entier, est une permutation de l'ensemble des nombres binaires de k bits, qui vérifie, pour un couple quelconque de nombres binaires de k bits δ, λ, où δ est non nul, l'équation suivante uniquement pour un nombre de valeurs d qui est inférieur à une valeur seuil :

$$f(d \oplus \delta) = f(d) \oplus \lambda$$

**9.** Etiquette radiofréquence selon la revendication 7 ou 8, dans laquelle la fonction déterminée f, sur laquelle est basée l'entité de transformation (503), présente un niveau de complexité inférieur à une valeur seuil.

**10.** Etiquette radiofréquence selon la revendication 9, dans laquelle, l'identifiant de l'étiquette comprenant un premier, un second, un troisième et un quatrième nombres binaires de k bits, l'entité de cryptage (504) fournit d'une part une première partie z de la valeur de l'identifiant crypté selon l'équation suivante :

$$z = a.x \oplus b.y \oplus v$$

où b et a sont respectivement le premier et le second nombres aléatoires sous une forme binaire de k bits ;
où x et y sont respectivement les premier et second nombres binaires de l'identifiant ; et
où v est le troisième nombre aléatoire ;
et fournit d'autre part une seconde partie z' de la valeur de l'identifiant crypté selon l'équation suivante :

$$z' = f(a).x' \oplus f(b).y' \oplus v'$$

où x' et y' sont respectivement les troisième et quatrième nombres binaires de l'identifiant ;
où f est la fonction déterminée et où f(b) et f(a) sont respectivement le premier et le second nombres transformés ; et
où v' est le quatrième nombre aléatoire.

**11.** Etiquette radiofréquence selon la revendication 10, dans laquelle, l'entité de gestion d'interface (506) envoie au lecteur d'étiquettes (101) la première partie (z) de la valeur de l'identifiant crypté dans un premier message (403) et la seconde partie (z') de la valeur de l'identifiant crypté dans un second message (404).

**12.** Dispositif d'identification d'étiquettes radiofréquence (101) dans un système d'identification d'étiquettes radiofréquence comprenant une pluralité d'étiquettes radiofréquence (102), un identifiant unique et secret (x,y,x',y') étant associé à chacune desdites étiquettes radiofréquence ;
ledit dispositif comprenant :

- une entité de génération aléatoire (604) adaptée pour générer un nombre aléatoire ($a_i$) ;
- une entité de gestion d'interface (601) avec lesdites étiquettes radiofréquence adaptée pour recevoir un premier nombre aléatoire ($b_i$) depuis une étiquette radiofréquence, pour envoyer un second nombre aléatoire ($a_i$), généré par ladite entité de génération aléatoire, à ladite étiquette radiofréquence et pour recevoir une valeur de l'identifiant crypté ($z_i$, $z_i'$), résultant d'une combinaison de l'identifiant de ladite étiquette avec les premier et second nombres aléatoires, avec des premier et second nombres transformés issus d'une transformation desdits premier et second nombres aléatoires ($b_i$, $a_i$) selon une fonction déterminée, et avec des troisième et quatrième nombres aléatoires générés selon une règle probabiliste par ladite étiquette ;
- une entité de stockage (602) adaptée pour stocker la fonction déterminée, la règle probabiliste, et une liste d'identifiants associés à des étiquettes du système ;
- une entité d'identification (603) adaptée pour identifier ladite étiquette radiofréquence en déterminant l'identifiant associé en fonction de N valeurs de l'identifiant crypté reçues depuis l'étiquette par l'entité de gestion d'interface, de la fonction déterminée, de la règle probabiliste, des N premiers et seconds nombres aléatoires utilisés pour fournir lesdites N valeurs de l'identifiant crypté et de la liste des identifiants stockés dans l'entité de stockage (602).

13. Dispositif d'identification d'étiquettes radiofréquence selon la revendication 12, dans lequel la fonction déterminée f, lorsque les premier et second nombres aléatoires sont des nombres binaires de k bits, k étant un entier, est une permutation de l'ensemble des nombres binaires de k bits, qui vérifie, pour un couple quelconque de nombres binaires de k bits δ, λ, où δ est non nul, l'équation suivante uniquement pour un nombre de valeurs d qui est inférieur à une valeur seuil :

$$f(d \oplus \delta) = f(d) \oplus \lambda$$

14. Dispositif d'identification d'étiquettes radiofréquence selon la revendication 12 ou 13, dans lequel la fonction déterminée f présente un niveau de complexité inférieur à une valeur seuil de niveau de complexité.

15. Dispositif d'identification d'étiquettes radiofréquence selon la revendication 14, dans lequel, l'identifiant de l'étiquette comprenant un premier, un second, un troisième et un quatrième nombres binaires de k bits, la valeur de l'identifiant crypté comprend une première partie z vérifiant l'équation suivante :

$$z = a.x \oplus b.y \oplus v$$

où b et a sont respectivement le premier et le second nombres aléatoires sous une forme binaire de k bits ;
où x et y sont respectivement les premier et second nombres binaires de l'identifiant ; et
où $v$ est le troisième nombre aléatoire ;
et comprend une seconde partie z' vérifiant l'équation suivante :

$$z' = f(a).x' \oplus f(b).y' \oplus v'$$

où x' et y' sont respectivement les troisième et quatrième nombres binaires de l'identifiant de l'étiquette radiofréquence ;
où f est la fonction déterminée et où f(b) et f(a) sont respectivement le premier et le second nombres transformés ;
et où $v'$ est le quatrième nombre aléatoire.

16. Dispositif d'identification d'étiquettes radiofréquence selon la revendication 15, dans lequel l'entité de gestion d'interface reçoit la première partie z de la valeur de l'identifiant crypté dans un premier message (403) et la seconde partie z' de la valeur de l'identifiant crypté dans un second message (404).

17. Système d'identification d'étiquettes radiofréquence comprenant un dispositif d'identification d'étiquettes selon l'une quelconque des revendications 12 à 16 et une pluralité d'étiquettes radiofréquence selon l'une quelconque des revendications 7 à 11.

**Claims**

1. Method of identifying an RF label (102) in an RF label identification system comprising an RF label reader (101) and a plurality of RF labels, a unique and secret identifier (x,y,x',y') being associated with each of said RF labels; said method comprising the following steps:

   /a/ sending (401) a first random number ($b_i$) from an RF label to the RF label reader;
   /b/ sending (402) a second random number ($a_i$) from the RF label reader to the RF label;
   /c/ in said RF label, encrypting the identifier of the label by executing the following steps consisting of:

   - generating third and fourth random numbers ($v_i$, $v_i'$) in accordance with a probabilistic rule;
   - transforming said first and second random numbers in accordance with a determined function and obtaining respective first and second transformed numbers ($f(b_i)$, $f(a_i)$);
   - obtaining a value of the encrypted identifier by combining the identifier of the label with the first and second random numbers, with the first and second transformed numbers, and with the third and fourth random numbers;

   /d/ sending (403, 404) from the RF label to the RF label reader the value of the encrypted identifier resulting from the step /c/;
   /e/ repeating the steps /a/ to /d/ N times, N being an integer;
   /f/ identifying said RF label in a list of label identifiers in the label reader by determining the associated identifier as a function of N values of the encrypted identifier received, of the determined function, of the N first and second random numbers and of the probabilistic rule.

2. Identification method according to Claim 1, wherein, the first and second random numbers being binary numbers of k bits, k being an integer, the determined function f is a permutation of the set of binary numbers of k bits that, for any pair of binary numbers δ, λ of k bits, where δ is non-zero, satisfies the following equation only for a number of values d that is less than a threshold value:

$$f(\text{d} \oplus \delta) \; = \; f(\text{d}) \oplus \lambda$$

3. Identification method according to Claim 1 or 2, wherein the determined function f has a level of complexity lower than a level of complexity threshold value.

4. Identification method according to Claim 2 or 3, wherein, the identifier of the label comprising first, second, third and fourth binary numbers of k bits, in the step /c/, there is obtained a first portion z of the value of the encrypted identifier according to the following equation:

$$z \; = \; \text{a.x} \oplus \text{b.y} \oplus v$$

where b and a are respectively the first and second random numbers in a binary form of k bits;
where x and y are respectively the first and second binary numbers of the identifier; and
where $v$ is the third random number;
and there is obtained a second portion z' of the value of the encrypted identifier according to the following equation:

$$z' \; = \; f(\text{a}).\text{x}' \oplus f(\text{b}).\text{y}' \oplus v'$$

where x' and y' are respectively the third and fourth binary numbers of the identifier;
where f is the determined function and where f(b) and f(a) are respectively the first and second transformed numbers;

and
where ν' is the fourth random number.

5. Identification method according to Claim 4, wherein, in the step /c/, the first portion z of the value of the encrypted identifier is sent in a first message (403) and the second portion z' of the value of the encrypted identifier is sent in a second message (404).

6. Identification method according to any one of the preceding claims, wherein the random number generation probabilistic rule is defined so as to generate a determined number with a probability having a determined value.

7. RF label (102) in an RF label identification system comprising an RF label reader (101), a unique and secret identifier being associated with said RF label; said label comprising:

   - a storage entity (505) adapted to store the identifier (x,y,x',y') of said label;
   - a random generation entity (501) adapted on the one hand to generate a first random number ($b_i$) and on the other hand to generate random numbers ($v_i,v_i'$) in accordance with a probabilistic rule;
   - a transformation entity (503) adapted to transform a number in accordance with a determined function and to supply a transformed number ($f(a_i),f(b_i)$);
   - an encryption entity (504) adapted to encrypt the identifier of the RF label by combining the identifier with the first random number and a second random number ($a_i$) received from the label reader, with third and fourth random numbers supplied by the generation entity in accordance with the probabilistic rule, and with first and second transformed numbers supplied by the transformation entity based on the first and second random numbers;
   - an interface management entity (506) for the interface with the RF label reader adapted to send the first random number to the label reader, to receive the second random number from the label reader, and to send the value of the encrypted identifier of the label supplied by the encryption entity.

8. RF label according to Claim 7, wherein the determined function f, on which the transformation entity (503) is based, when the first and second random numbers are binary numbers of k bits, k being an integer, is a permutation of the set of binary numbers of k bits that, for any pair of binary numbers $\delta$, $\lambda$ of k bits, where $\delta$ is non-zero, satisfies the following equation only for a number of values d that is less than a threshold value:

$$f(d \oplus \delta) = f(d) \oplus \lambda$$

9. RF label according to Claim 7 or 8, wherein the determined function f, on which the transformation entity (503) is based, has a level of complexity lower than a threshold value.

10. RF label according to Claim 9, wherein, the identifier of the label comprising first, second, third and fourth binary numbers of k bits, the encryption entity (504) supplies on the one hand a first portion z of the value of the encrypted identifier in accordance with the following equation:

$$z = a.x \oplus b.y \oplus v$$

where b and a are respectively the first and second random numbers in a binary form on k bits;
where x and y are respectively the first and second binary numbers of the identifier; and
where ν is the third random number;
and supplies on the other hand a second portion z' of the value of the encrypted identifier in accordance with the following equation:

$$z' = f(a).x' \oplus f(b).y' \oplus v'$$

where x' and y' are respectively the third and fourth binary numbers of the identifier;
where f is the determined function and where f(b) and f(a) are respectively the first and second transformed numbers;

and
where v' is the fourth random number.

11. RF label according to Claim 10, wherein, the interface management entity (506) sends to the label reader (101) the first portion (z) of the value of the encrypted identifier in a first message (403) and the second portion (z') of the value of the encrypted identifier in a second message (404).

12. RF label identification device (101) in an RF label identification system comprising a plurality of RF labels (102), a unique and secret identifier (x,y,x',y') being associated with each of said RF labels;
said device comprising:

- a random generation entity (604) adapted to generate a random number ($a_i$);
- an interface management entity (601) for the interface with said RF labels adapted to receive a first random number ($b_i$) from an RF label, to send a second random number ($a_i$), generated by said random generation entity, to said RF label and to receive a value of the encrypted identifier ($z_i$, $z_i'$), resulting from combination of the identifier of said label with the first and second random numbers, with first and second transformed numbers resulting from transformation of said first and second random numbers ($b_i$, $a_i$) in accordance with a determined function, and with third and fourth random numbers generated in accordance with a probabilistic rule by said label;
- a storage entity (602) adapted to store the determined function, the probabilistic rule and a list of identifiers associated with labels of the system;
- an identification entity (603) adapted to identify said RF label by determining the associated identifier as a function of N values of the encrypted identifier received from the label by the interface management entity, of the determined function, of the probabilistic rule, of the N first and second random numbers used to provide said N values of the encrypted identifier, and of the list of identifiers stored in the storage entity (602).

13. RF label identification device according to Claim 12, wherein the determined function f, when the first and second random numbers are binary numbers of k bits, k being an integer, is a permutation of the set of binary numbers of k bits that, for any pair of binary numbers $\delta$, $\lambda$ of k bits, where $\delta$ is non-zero, satisfies the following equation only for a number of values d that is less than a threshold value:

$$f(d \oplus \delta) = f(d) \oplus \lambda$$

14. RF label identification device according to Claim 12 or 13, wherein the determined function f has a level of complexity lower than a level of complexity threshold value.

15. RF label identification device according to Claim 14, wherein, the identifier of the label comprising first, second, third and fourth binary numbers of k bits, the value of the encrypted identifier comprises a first portion z satisfying the following equation:

$$z = a.x \oplus b.y \oplus v$$

where b and a are respectively the first and second random numbers in a binary form on k bits;
where x and y are respectively the first and second binary numbers of the identifier; and
where v is the third random number;
and comprises a second portion z' satisfying the following equation:

$$z' = f(a).x' \oplus f(b).y' \oplus v'$$

where x' and y' are respectively the third and fourth binary numbers of the identifier of the RF label;
where f is the determined function and where f(b) and f(a) are respectively the first and second transformed numbers;
and
where v' is the fourth random number.

16. RF label identification device according to Claim 15, wherein the interface management entity receives the first portion z of the value of the encrypted identifier in a first message (403) and the second portion z' of the value of the encrypted identifier in a second message (404).

17. RF label identification system comprising a label identification device according to any one of Claims 12 to 16 and a plurality of RF labels according to any one of Claims 7 to 11.

**Patentansprüche**

1. Verfahren zum Identifizieren eines Radiofrequenzetiketts (102) in einem System zum Identifizieren von Radiofrequenzetiketten, das eine Radiofrequenzetiketten-Leseeinrichtung (101) und eine Mehrzahl von Radiofrequenzetiketten aufweist,
wobei jedem der Radiofrequenzetiketten eine unverwechselbare und geheime Kennung (x, y, x', y') zugeordnet ist;
wobei das Verfahren die folgenden Schritte umfasst:

/a/ Senden (401) einer ersten Zufallszahl ($b_i$) von einem Radiofrequenzetikett an die Radiofrequenzetiketten-Leseeinrichtung;
/b/ Senden (402) einer zweiten Zufallszahl ($a_i$) von der Radiofrequenzetiketten-Leseeinrichtung an das Radiofrequenzetikett;
/c/ Verschlüsseln der Kennung des Etiketts am Radiofrequenzetikett mittels Durchführung der folgenden Schritte, welche darin bestehen:

- eine dritte und eine vierte Zufallszahl ($v_i$, $v_i'$) gemäß einer Wahrscheinlichkeitsregel zu erzeugen;
- die erste und die zweite Zufallszahl gemäß einer festgelegten Funktion zu transformieren und eine erste und eine zweite transformierte Zahl ($f(b_i)$, $f(a_i)$) zu erhalten;
- einen Wert der verschlüsselten Kennung durch Verknüpfen der Kennung des Etiketts mit der ersten und der zweiten Zufallszahl, mit der ersten und der zweiten transformierten Zahl, und mit der dritten und der vierten Zufallszahl zu erhalten;

/d/ Senden (403, 404) des aus Schritt /c/ resultierenden Wertes der verschlüsselten Kennung von dem Radiofrequenzetikett an die Radiofrequenzetiketten-Leseeinrichtung;
/e/ N-maliges Wiederholen der Schritte /a/ bis /d/, wobei N eine ganze Zahl ist;
/f/ Identifizieren des Radiofrequenzetiketts in einer Liste von Etikettkennungen an der Etiketten-Leseeinrichtung durch Bestimmen der zugeordneten Kennung in Abhängigkeit von den N empfangenen Werten der verschlüsselten Kennung, der festgelegten Funktion, den N ersten und zweiten Zufallszahlen, und der Wahrscheinlichkeitsregel.

2. Identifizierungsverfahren nach Anspruch 1, bei dem, wenn die erste und die zweite Zufallszahl binäre Zahlen mit k Bits sind und k eine ganze Zahl ist, die festgelegte Funktion f eine Permutation der Gesamtheit der binären Zahlen mit k Bits ist, welche für ein beliebiges Paar von binären Zahlen mit k Bits $\delta$, $\lambda$, bei dem $\delta$ ungleich Null ist, die folgende Gleichung nur für eine Anzahl von Werten d erfüllt, die unter einem Schwellwert liegt:

$$f(d \oplus \delta) = f(d) \oplus \lambda$$

3. Identifizierungsverfahren nach Anspruch 1 oder 2, bei dem die festgelegte Funktion f ein Komplexitätsniveau besitzt, das unter einem Schwellwert des Komplexitätsniveaus liegt.

4. Identifizierungsverfahren nach Anspruch 2 oder 3, bei dem, wenn die Kennung des Etiketts eine erste, eine zweite, eine dritte und eine vierte binäre Zahl mit k Bits umfasst, in Schritt /c/ ein erster Teil z des Wertes der verschlüsselten Kennung gemäß der folgenden Gleichung erhalten wird:

$$z = a.x \oplus b.y \oplus v$$

wobei b und a die erste bzw. die zweite Zufallszahl in einer binären Form mit k Bits sind;

wobei x und y die erste bzw. die zweite binäre Zahl der Kennung sind; und

wobei $v$ die dritte Zufallszahl ist;

und ein zweiter Teil z' des Wertes der verschlüsselten Kennung gemäß der folgenden Gleichung erhalten wird:

$$z' = f(a).x' \oplus f(b).y' \oplus v'$$

wobei x' und y' die dritte bzw. die vierte binäre Zahl der Kennung sind;

wobei f die festgelegte Funktion ist, und wobei f(b) und f(a) die erste bzw. die zweite transformierte Zahl sind; und

wobei v' die vierte Zufallszahl ist.

5. Identifizierungsverfahren nach Anspruch 4, bei dem in Schritt /c/ der erste Teil z des Wertes der verschlüsselten Kennung in einer ersten Nachricht (403) gesendet wird, und der zweite Teil z' des Wertes der verschlüsselten Kennung in einer zweiten Nachricht (404) gesendet wird.

6. Identifizierungsverfahren nach einem der vorherigen Ansprüche, bei dem die Wahrscheinlichkeitsregel zum Erzeugen von Zufallszahlen derart definiert ist, dass eine bestimmte Zahl mit einer Wahrscheinlichkeit erzeugt wird, die einen bestimmten Wert besitzt.

7. Radiofrequenzetikett (102) in einem System zum Identifizieren von Radiofrequenzetiketten, welches eine Radiofrequenzetiketten-Leseeinrichtung (101) aufweist, wobei dem Radiofrequenzetikett eine unverwechselbare und geheime Kennung zugeordnet ist;

wobei das Etikett aufweist:

- eine Speicherinstanz (505), die zum Speichern der Kennung (x, y, x', y') des Etiketts ausgelegt ist;
- eine Zufallserzeugungsinstanz (501), die zum Erzeugen einer ersten Zufallszahl ($b_i$) einerseits und zum Erzeugen der Zufallszahlen ($v_i$, $v_i'$) gemäß einer Wahrscheinlichkeitsregel andererseits ausgelegt ist;
- eine Transformierungsinstanz (503), die dazu ausgelegt ist, eine Zahl gemäß einer festgelegten Funktion zu transformieren und eine transformierte Zahl ($f(a_i)$, $f(b_i)$) zu liefern;
- eine Verschlüsselungsinstanz (504), die dazu ausgelegt ist, die Kennung des Radiofrequenzetiketts durch Verknüpfen der Kennung mit der ersten Zufallszahl und einer von der Etiketten-Leseeinrichtung empfangenen zweiten Zufallszahl ($a_i$), mit einer dritten und einer vierten Zufallszahl, die von der Erzeugungsinstanz gemäß der Wahrscheinlichkeitsregel geliefert werden, und mit einer ersten und zweiten transformierten Zahl, die ausgehend von der ersten und der zweiten Zufallszahl von der Transformierungsinstanz geliefert werden, zu verschlüsseln;
- eine Schnittstellensteuerinstanz (506) zum Steuern einer Schnittstelle mit der Radiofrequenzetiketten-Leseeinrichtung, die dazu ausgelegt ist, die erste Zufallszahl an die Etiketten-Leseeinrichtung zu senden, die zweite Zufallszahl von der Etiketten-Leseeinrichtung zu empfangen, und den von der Verschlüsselungsinstanz gelieferten Wert der verschlüsselten Kennung des Etiketts zu senden.

8. Radiofrequenzetikett nach Anspruch 7, wobei, falls die erste und die zweite Zufallszahl binäre Zahlen mit k Bits sind, wobei k eine ganze Zahl ist, die festgelegte Funktion f, auf der die Transformierungsinstanz (503) basiert, eine Permutation der Gesamtheit der binären Zahlen mit k Bits ist, welche für ein beliebiges Paar von binären Zahlen mit k Bits $\delta$, $\lambda$, bei dem $\delta$ ungleich Null ist, die folgende Gleichung nur für eine Anzahl von Werten d erfüllt, die unter einem Schwellwert liegt:

$$f(d \oplus \delta) = f(d) \oplus \lambda$$

9. Radiofrequenzetikett nach Anspruch 7 oder 8, wobei die festgelegte Funktion f, auf der die Transformierungsinstanz (503) basiert, ein Komplexitätsniveau besitzt, das unter einem Schwellwert liegt.

10. Radiofrequenzetikett nach Anspruch 9, wobei, wenn die Kennung des Etiketts eine erste, eine zweite, eine dritte und eine vierte binäre Zahl mit k Bits umfasst, die Verschlüsselungsinstanz (504) einerseits einen ersten Teil z des Wertes der verschlüsselten Kennung gemäß der folgenden Gleichung liefert:

$$z = a.x \oplus b.y \oplus v$$

wobei b und a die erste bzw. die zweite Zufallszahl in einer binären Form von k Bits sind;
wobei x und y die erste bzw. die zweite binäre Zahl der Kennung sind; und
wobei v die dritte Zufallszahl ist;
und andererseits einen zweiten Teil z' des Wertes der verschlüsselten Kennung gemäß der folgenden Gleichung liefert:

$$z' = f(a).x' \oplus f(b).y' \oplus v'$$

wobei x' und y' die dritte bzw. die vierte binäre Zahl der Kennung sind;
wobei f die festgelegte Funktion ist, und wobei f(b) und f(a) die erste bzw. die zweite transformierte Zahl sind; und
wobei v' die vierte Zufallszahl ist.

**11.** Radiofrequenzetikett nach Anspruch 10, wobei die Schnittstellensteuerinstanz (506) den ersten Teil (z) des Wertes der verschlüsselten Kennung in einer ersten Nachricht (403) und den zweiten Teil (z') des Wertes der verschlüsselten Kennung in einer zweiten Nachricht (404) an die Etiketten-Leseeinrichtung (101) sendet.

**12.** Vorrichtung (101) zum Identifizieren von Radiofrequenzetiketten in einem System zum Identifizieren von Radiofrequenzetiketten, das eine Mehrzahl von Radiofrequenzetiketten (102) aufweist, wobei jedem der Radiofrequenzetiketten eine unverwechselbare und geheime Kennung (x, y, x', y') zugeordnet ist;
wobei die Vorrichtung aufweist:

- eine Zufallserzeugungsinstanz (604), die dazu ausgelegt ist, eine Zufallszahl ($a_i$) zu erzeugen;
- eine Schnittstellensteuerinstanz (601) zum Steuern einer Schnittstelle mit den Radiofrequenzetiketten, die dazu ausgelegt ist, eine erste Zufallszahl ($b_i$) von einem Radiofrequenzetikett zu empfangen, eine von der Zufallserzeugungsinstanz erzeugte zweite Zufallszahl ($a_i$) an das Radiofrequenzetikett zu senden, und einen Wert der verschlüsselten Kennung ($z_i$, $z_i'$) zu empfangen, der aus einer Verknüpfung der Kennung des Etiketts mit der ersten und der zweiten Zufallszahl, mit der ersten und der zweiten transformierten Zahl, die aus einer Transformierung der ersten und der zweiten Zufallszahl ($b_i$, $a_i$) gemäß einer festgelegten Funktion hervorgegangen sind, und mit der dritten und der vierten Zufallszahl, die gemäß einer Wahrscheinlichkeitsregel von dem Etikett erzeugt wurden, resultiert;
- eine Speicherinstanz (602), die dazu ausgelegt ist, die festgelegte Funktion, die Wahrscheinlichkeitsregel und eine Liste von Kennungen, die Etiketten des Systems zugeordnet sind, zu speichern;
- eine Identifizierungsinstanz (603), die dazu ausgelegt ist, das Radiofrequenzetikett durch Bestimmen der zugeordneten Kennung in Abhängigkeit von N Werten der verschlüsselten Kennung, die von der Schnittstellensteuerinstanz empfangen wurden, der festgelegten Funktion, der Wahrscheinlichkeitsregel, der N ersten und zweiten Zufallszahlen, die verwendet wurden, um die N Werte der verschlüsselten Kennung zu liefern, und der Liste der in der Speicherinstanz (602) gespeicherten Kennungen zu identifizieren.

**13.** Vorrichtung zum Identifizieren von Radiofrequenzetiketten nach Anspruch 12, bei der, falls die erste und die zweite Zufallszahl binäre Zahlen mit k Bits sind, wobei k eine ganze Zahl ist, die festgelegte Funktion f eine Permutation der Gesamtheit der binären Zahlen mit k Bits ist, welche für ein beliebiges Paar von binären Zahlen mit k Bits $\delta$, $\lambda$, bei dem $\delta$ ungleich Null ist, die folgende Gleichung nur für eine Anzahl von Werten d erfüllt, die unter einem Schwellwert liegt:

$$f(d \oplus \delta) = f(d) \oplus \lambda$$

**14.** Vorrichtung zum Identifizieren von Radiofrequenzetiketten nach Anspruch 12 oder 13, bei der die festgelegten Funktion f ein Komplexitätsniveau besitzt, das unter einem Schwellwert des Komplexitätsniveaus liegt.

**15.** Vorrichtung zum Identifizieren von Radiofrequenzetiketten nach Anspruch 14, bei der, wenn die Kennung des Etiketts eine erste, eine zweite, eine dritte und eine vierte binäre Zahl mit k Bits umfasst, der Wert der verschlüsselten Kennung einen ersten Teil z aufweist, der die folgende Gleichung erfüllt:

$$z = a.x \oplus b.y \oplus v$$

wobei b und a die erste bzw. die zweite Zufallszahl in einer binären Form von k Bits sind;
wobei x und y die erste bzw. die zweite binäre Zahl der Kennung sind; und
wobei v die dritte Zufallszahl ist;
und einen zweiten Teil z' aufweist, der die folgende Gleichung erfüllt:

$$z' = f(a).x' \oplus f(b).y' \oplus v'$$

wobei x' und y' die dritte bzw. die vierte binäre Zahl der Kennung des Radiofrequenzetiketts sind;
wobei f die festgelegte Funktion ist, und wobei f(b) und f(a) die erste bzw. die zweite transformierte Zahl sind; und
wobei v' die vierte Zufallszahl ist.

16. Vorrichtung zum Identifizieren von Radiofrequenzetiketten nach Anspruch 15, bei der die Schnittstellensteuerinstanz den ersten Teil z des Wertes der verschlüsselten Kennung in einer ersten Nachricht (403) und den zweiten Teil z' des Wertes der verschlüsselten Kennung in einer zweiten Nachricht (404) empfängt.

17. System zum Identifizieren von Radiofrequenzetiketten, welches eine Vorrichtung zum Identifizieren von Radiofrequenzetiketten nach einem der Ansprüche 12 bis 16 und eine Mehrzahl von Radiofrequenzetiketten nach einem der Ansprüche 7 bis 11 aufweist.

FIG. 1

# FIG. 2

**101** LECTEUR x

**102** ÉTIQUETTE x

ÉTAPE 1
$$a_1 \rightarrow 103$$
$$z_1 = a_1.x + v_1 \leftarrow 104$$

ÉTAPE i
$$a_i \rightarrow 103$$

ÉTAPE N
$$z_i = a_i.x + v_i \leftarrow 104$$

# FIG. 3

**101** LECTEUR (x,y)

**102** ÉTIQUETTE (x,y)

ÉTAPE i
$$b_i \leftarrow 201$$
$$a_i \rightarrow 202$$
$$z_i = a_i.x \oplus b_i.y \oplus v_i \leftarrow 203$$

# FIG. 4

ÉTAPE 1

$b_1$ — 401

$a_1$ — 402

$z_i = a_1.x \oplus b_1.y \oplus v_1$ — 403

$z'_1 = f(a_1).x' \oplus f(b_1).y' \oplus v'_1$ — 404

ÉTAPE i

$b_i$ — 401

$a_i$ — 402

$z_i = a_i.x \oplus b_i.y \oplus v_i$ — 403

$z'_i = f(a_i).x' \oplus f(b_i).y' \oplus v'_i$ — 404

ÉTAPE N

$b_N$ — 401

$a_N$ — 402

$z_N = a_N.x \oplus b_N.y \oplus v_N$ — 403

$z'_N = f(a_N).x' \oplus f(b_N).y' \oplus v'_N$ — 404

LECTEUR $(x, y, x', y')$ — 101

ÉTIQUETTE $(x, y, x', y')$ — 102

**FIG. 5**

**FIG. 6**

**RÉFÉRENCES CITÉES DANS LA DESCRIPTION**

**Littérature non-brevet citée dans la description**

- Active attack against HB+: a probably secure lightweight authentication protocol. *Electronics Letters, IEE Sterenage,* 13 Octobre 2005, vol. 41 (21